# EUROPEAN PATENT APPLICATION

(11) **EP 4 538 920 A1**
(43) Date of publication of application: **16.04.2025**
(21) Application number: 24202521.1
(22) Date of filing: 25.09.2024
(51) Int. Cl.: G06F 30/17, G06F 30/27, G06F 119/14, G06F 113/26

(54) **OBJECT DESIGN EVALUATION BASED ON REWORK AND WEIGHT COSTS**

(30) Priority: 12.10.2023 US 202318485927
(71) Applicant: The Boeing Company, Arlington, VA 22202 (US)
(72) Inventor: BAUER, Andrew Lawrence, Arlington, 22202 (US); REYNOLDS, Carla Elizabeth, Arlington, 22202 (US)
(74) Representative: Morrall, Jonathan Ian McLachlan

(57) **Abstract**

The present application is directed to a process for evaluating a design of an object. The process starts with an initial design. Machine learning using analytics based on historical data determines the probabilities for defects in the design. The evaluation also analyzes the design for structural requirements. The process analyzes the design based on a cost for the weight of the object and a cost to rework the design.

## Description

### TECHNOLOGICAL FIELD

The present disclosure relates generally to the field of design evaluation and, more specifically to design evaluation that includes a rework cost and a weight cost analysis.

### BACKGROUND

Designers produce an initial design for an object that provides the necessary structural strength to withstand the various forces that will be exerted on the object during use. Typically an initial design is robust and includes larger margins than necessary. A margin is an area of the object that can be removed and still meet the necessary structural strength. For example, the initial design of an object can have an initial thickness that is greater than a minimum thicknesses needed for the part to have the necessary strength to perform its intended function. During the development of the object, the design may be refined, such as a reduction in size to reduce weight. The refining includes removing a portion of the margin.

The design phase often assumes that the manufacturing of the object will result in the object being free from defects. However, defects often occur during manufacturing that result in the removal of additional margin. If the additional removal results in too much margin being removed, the part is no longer functional which requires a redesign and/or an updated engineering analysis. If the manufacturing changes are not too extensive such that the margins are still acceptable, the defects that occur during manufacturing may continue which raises the cost of the object.

Current design processes do not account for changes that are made to an initial design. A more effective process includes accounting for these changes to determine how changes to the design impacts a cost of the manufactured object.

### SUMMARY

One example is directed to a method of evaluating a design of an object with the method comprising: analyzing the design using a machine learning model representative of production data; predicting defect probabilities based on the machine learning model; determining a rework cost of the design based on the defect probabilities; performing strength analysis on the design; determining a weight of the design; determining a weight cost of the design based on the weight of the design; and analyzing the design based on the weight cost and the rework cost.

In another example, the method further comprises: performing the analysis on the design and ensuring the design is within a margin of safety; and determining the weight of the design that is within the margin of safety.

In another example, the method further comprises: performing the analysis on the design and determining that the design is not within a margin of safety; in response, adding one or more composite plies of material to the design and increasing the weight of the design; and performing the analysis again and determining that the design is within the margin of safety.

In another example, the method further comprises: performing the analysis and determining that the design exceeds a margin of safety; in response, removing one or more composite plies of material from the design and decreasing the weight of the design; and performing the analysis again and determining that the design is within the margin of safety.

In another example, the method further comprises determining the defect probabilities based on an expected process configuration for manufacturing of the design.

In another example, determining the rework cost of the design comprises factoring one or more of a supply chain dispersion and a total cost of manufacturing of the design.

In another example, analyzing the design based on the weight cost and the rework cost comprises minimizing the weight cost and the rework cost of the design.

In another example, the method further comprises factoring the defect probabilities of the design when performing the stress analysis on the design.

In another example, the method further comprises determining the defect probabilities of the design prior to determining the rework cost of the design.

One example is directed to a method of evaluating a design of an object with the method comprising: predicting defect probabilities of manufacturing the design based on a production data; determining a rework cost of reworking the design; conducting a margin analysis and determining a strength of the design; determining a weight cost of the design; and determining a total cost of the design based on the rework cost and the weight cost.

In another example, the method further comprises predicting the defect probabilities based on a process configuration for manufacturing the design.

In another example, the method further comprises conducting the margin analysis by factoring the defect probabilities from the machine learning model.

In another example, the method further comprises conducting the margin analysis based on expected loads that are to be placed on the object during use.

In another example, the method further comprises removing or adding one or more composite plies from the design based on the margin analysis.

In another example, the method further comprises predicting the defect probabilities prior to conducting the margin analysis.

In another example, determining the rework cost of the design comprises factoring one or more of a supply chain dispersion and a total cost of manufacturing of the design.

In another example, the method further comprises minimizing the weight cost and the rework cost of the design prior to determining the total cost of the design.

One example is directed to a computing device configured to evaluate a design of an object. The computing device comprises memory circuitry with stored program instructions and processing circuitry configured to execute the program instructions to cause the computing device to: predict defect probabilities of manufacturing the design based on a machine learning model; determine a rework cost of reworking the design; determine that the design exceeds a margin of safety for strength; determine a weight cost of the design; and determine a total cost of the design based on the rework cost and the weight cost.

In another example, the processing circuitry is configured to change the design by one of adding one or more plies to the design or removing one or more plies from the design.

In another example, a machine learning model is stored in the memory circuitry and is configured to predict the defect probabilities.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is a perspective view of one or more objects that can be based on designs that are analyzed by the evaluation process.
Figure 2 is an object that is evaluated by the evaluation process.
Figure 3 is a flowchart diagram of a process of evaluating a design for an object.
Figure 4 is a flowchart diagram of a process of evaluating a design for an object.
Figure 5 is a flowchart diagram of a process of evaluating a design for an object.
Figure 6 is a schematic diagram of a computing device.

### DETAILED DESCRIPTION

The present application is directed to a process for evaluating a design of an object. The process starts with an initial design. Machine learning using analytics based on historical data determines the probabilities for defects in the design. The evaluation also analyzes the design for structural requirements. The process analyzes the design based on a cost for the weight of the object and a cost to rework the design.

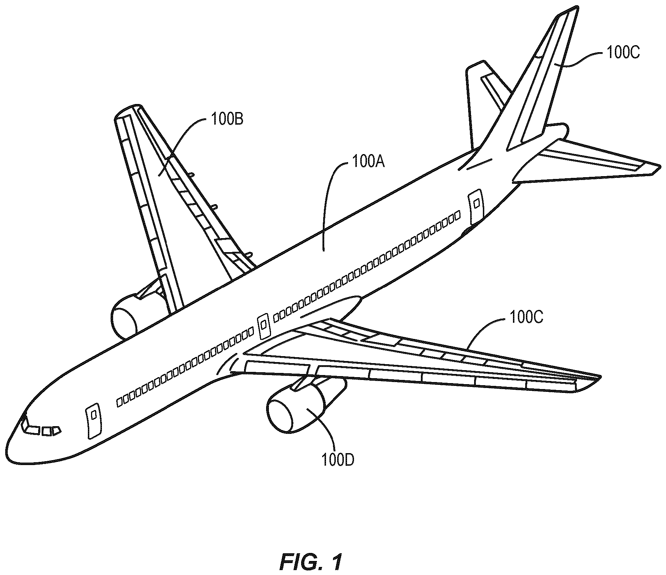

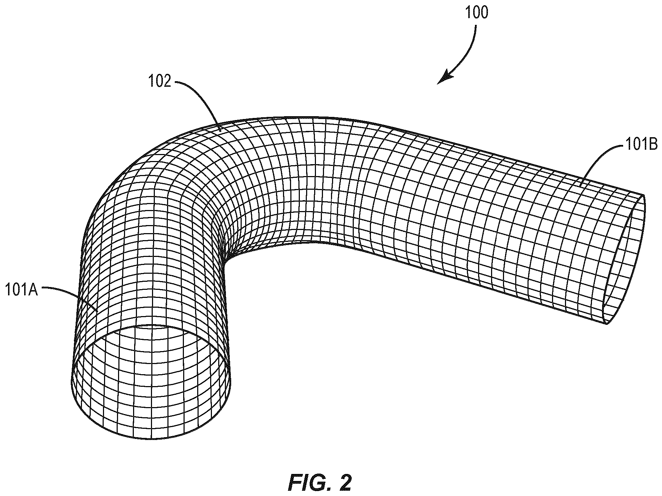

The object 100 can be any type of physical component that is manufactured and can include a variety of different configurations and be used for a variety of different contexts. Figure 1 illustrates an example in which the object 100 is associated with an aircraft. The object 100 can include an entire section of the aircraft, such as the fuselage 100A, wing 100B, and interior wall. Another example includes the object 100 being a smaller component, such as a flight control member 100C (e.g., rudder, aileron), engine housing 100D, interior cabin panel, and engine component. Examples of objects 100 include but are not limited to vehicles (e.g., aircraft, ships, trucks, cars, trains and other rail-based transport, spacecraft, undersea craft, and trailers), equipment, building components, and various smaller components associated with these larger items. Figure 2 illustrates another example of an object 100 which is a conduit that can be used for a variety of different applications.

The object 100 is designed to have a strength to enable use for an expected application. The strength is a measure of stress that can be applied before the object 100 permanently deforms or breaks. The term strength accounts for both yield strength and tensile strength. In some examples, the object 100 is required to have a predetermined strength (e.g., withstand a shear force of 100kN, support a weight of 100 lbs.). In some examples, the design 110 includes a margin of safety that exceeds the required strength. This margin of safety is a margin required in order to ensure safety of the object. For example, an object 100 that is required to support a weight of 50 lbs. is designed to support a weight of 60 lbs.

The design 110 also includes the materials for constructing the object 100. In some examples, the materials include composite plies that are layered to form the object 100. The composite plies are a sheet member that includes one or more layers of fibers. The fibers can be formed from a variety of materials, including but not limited to aramids, polyolefins, metal, glass, carbon, boron, ceramic, mineral, and combinations. The fibers are pre-impregnated with a thermoset or thermoplastic matrix resin (e.g., prepreg). In another example, the matrix resin includes a hybrid system of both thermoset and thermoplastic. The matrix resin can be formed from a variety of substances, including but not limited to acrylics, fluorocarbons, polyamides (PA), polyethylenes (PE) such as polyethylene terephthalate (PET), polyesters, polypropylenes (PP), polycarbonates (PC), polyurethanes (PU), polyetheretherketones (PEEK), polyetherketoneketones (PEKK), polyetherimides (PEI), and other material compositions. In some examples, the design 110 includes one or more of the alignment of the plies and orientation of the fibers.

The object 100 can be manufacturing in various manners such as but not limited to a composite process (e.g., an automated tape laying (ATL) or automated fiber placement (AFP) process) or a non-composite process (e.g., an additive manufacturing process, such as three-dimensional (3D) printing, or a subtractive manufacturing process, such as machining).

The design 110 results in the object 100 having a predetermined weight. The weight is a function of the material and dimensions of the object 100. In some examples, the design 110 is configured to have a minimum weight while still meeting the required margin of safety. The low weight can be an important feature of the object 100 when in use. In one example in which the object 100 is for use in an aircraft, the lighter weight provides for less expensive operational costs for the aircraft. In some examples, the lighter weight is a result of less material used in the object 100 and thus a smaller material cost for manufacturing the object 100.

The evaluation analyzes a design 110 of the object 100. In some examples, the evaluation occurs during an initial phase of developing the design 110 and prior to manufacturing. The design 110 can be in various manners and formats. In some examples, the design 110 is graphically generated by the designer via a graphical user interface (GUI), generated based on non-graphical data, such as a collection of points representing surface data or a set of geometric parameters (e.g., dimensions, orientations, and locations of components), or a combination thereof. In some examples, the design 110 is graphically generated design data received from the designer via the GUI, non-graphical design data received from the designer (e.g., via a keyboard), or a combination thereof. In some implementations, the design 110 is retrieved from one or more stored files, such as a computer-aided design (CAD) model file. In one specific example, the design 110 includes a CAD model of the design 110 or a portion of a CAD model of the design 110.

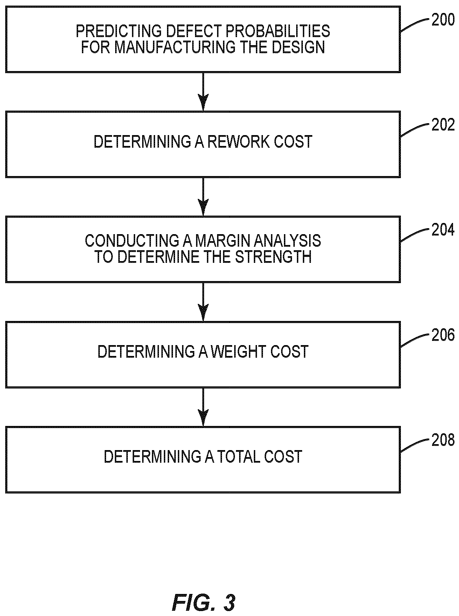

Figure 3 illustrates a method of evaluating a design 110. The evaluation includes predicting defect probabilities of manufacturing the design 110 based on a machine learning model 29 representative of production data (block 200). A rework cost is determined for reworking the design 110 during manufacturing (block 202). A margin analysis is conducted to determine a strength of the design 110 (block 204). In some examples, the margin analysis determines that the design meets the margin of safety. A weight cost is determined for the design 110 (block 206). A total cost of the design 110 is determined based on the rework cost and the weight cost (block 208).

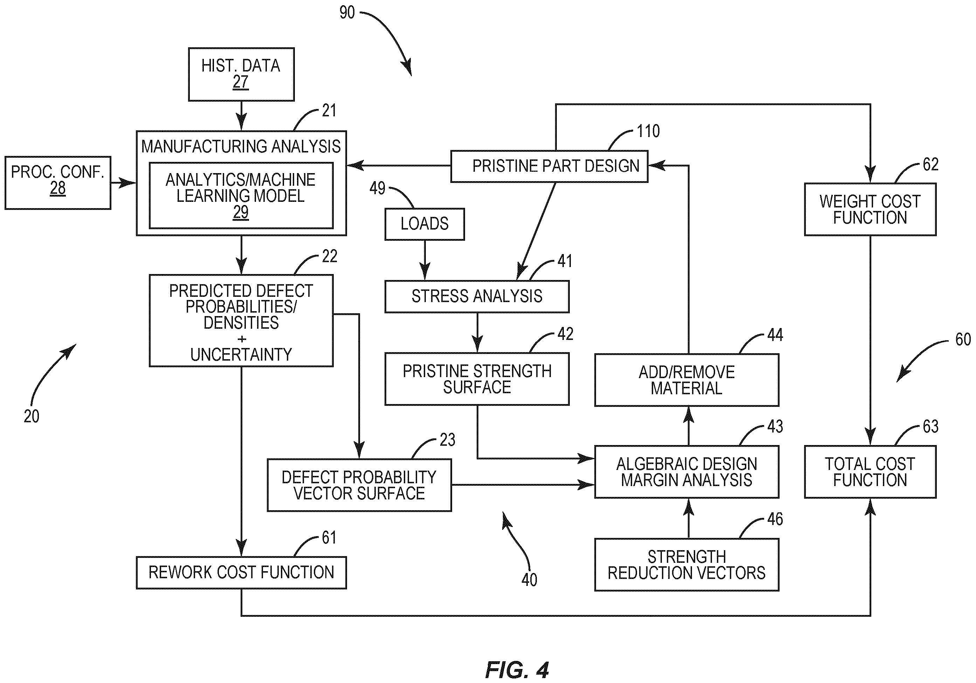

Figure 4 illustrates an example of a process 90 of evaluating a design 110. The process 90 includes machine learning 20 that analyzes the design 110 based on a machine learning model 29 and determines the probabilities of a defect during manufacturing. Margin analysis 40 determines the strength of the design 110 and whether modifications are available. Cost analysis 60 uses the output of the machine learning 20 and margin analysis 40 to determine the costs associated with the design 110.

Machine learning 20 determines the probabilities of defects occurring during manufacturing of the object 100. In one example, the manufacturing process is an automated fiber placement (AFP) process and defects include but are not limited to folds, puckers, twisted tows, wrinkles, and wandering tows. Other examples include different manufacturing processes and can include a variety of different defects.

The machine learning 20 uses a machine learning model 29 that analyzes the manufacturing of the design 110 (block 21). The machine learning model 29 receives inputs including the design 110 and an expected process configuration 28. In some examples in which the design 110 includes a composite fiber construction, the process configuration data includes one or more of spatial data (e.g., sequence, course, tow), process data (e.g. speed, heat override, pressure, tension, roller type), object geometry (e.g., curvature), and environmental data (e.g., ambient temperature, humidity).

The machine learning model 29 is trained based on historical data 27. The historical data 27 includes the manufacturing of previous designs and resultant defects (or lack of defects) during manufacturing. In some examples, the historical data 27 includes one or more of object features such as regions of curvature of the object and a ply angle of the object, process configurations used during manufacturing of the object, environmental factors during manufacturing of the object, and the defects including defects observed in the produced object and detects determined from testing of the produced object.

The machine learning model 29 predicts the defect probabilities of manufacturing an object 100 according to the design 110 (block 22). In some examples, the machine learning model 29 outputs various results including but not limited to one or more of the types of defects, location of the defect within the design, and probability of each type of defect. In one example for a composite ply construction, the output includes a defect probability vector surface that includes a probability of defect per ply and a location of the defects throughout the thickness (block 23).

In some examples, the defect probability vectors contain a probability for multiple types of defects, including multiple types of the same defect class depending on characteristics. In one example, wrinkle with length over a certain distance (L/D), then another in between that LID ratio and another etc.

The margin analysis 40 determines that the design 110 has the necessary strength and meets or exceeds the margin of safety. A stress analysis (block 41) is performed on the design 110 which includes applying one or more loads 49 on the design 110. The stress analysis outputs the strength of the design (block 42).

A margin analysis (block 43) determines whether the design 110 meets the required strength requirements. The margin analysis is based on the pristine strength surface (block 42), the defect probability vector surface (block 23) from the machine learning 20, and a strength reduction vector (block 46) that includes a strength of the design in view of one or more defects. In one example, the strength reduction vector indicates the strength in view of one or more redundancies that are included in the design 110. In some examples, the strength reduction vector could be numbers or could be functions. In one example, the strength reduction vector includes elements that are functions of both the defect probabilities and characteristics of the design.

The margin analysis (block 43) determines whether the design 110 provides the strength to withstand the predetermined forces. In one example, the margin analysis determines whether the strength meets or exceeds the margin of safety for the strength. In view of the margin analysis, the process determines whether material can be removed or added to the design 110 (block 44). Material can be removed when the design 110 exceeds the strength requirements. Material is added to the design 110 when the strength requirements are not met. In some examples with the design 110 includes a construction from composite plies, the addition and removal includes removing or adding composite plies. In some examples, the addition of plies can include the orientation of the fibers on the composite plies to provide for the necessary strength.

In some examples the design 110 includes a single strength requirement or margin of safety. In other examples, the design includes two or more strength requirements of margins of safety. Using Figure 2 as an example, sections 101A, 101B that have a straight shape include a first strength requirement, and a curved section 102 includes a different second strength requirement. In other examples the design 110 includes more than two strength requirements.

The cost analysis 60 evaluates the aspects of the cost to rework the design 110 and the cost of the weight of the object 100. In some examples, the analysis determines a design 110 with the lowest manufacturing costs and the lightest weight. The analysis evaluates a rework cost (block 61) and a weight cost (block 62) to determine a total cost for the design (block 63).

The cost analysis 60 analyzes the trade-off with the amount of material used for the design 110. Adding additional material to the design 110 reduces the probability of manufacturing defects and increases the strength. However, additional material increases the weight of the object 100. In one example in which the object 100 is for use in an aircraft, the lighter weight provides for less expensive operational costs for the aircraft. The cost analysis 60 analyzes the compromise between these two competing aspects.

The rework cost analysis (block 61) factors the probabilities of a defect occurring and the associated cost to rework the design 110 during manufacturing. The rework cost function can use various factors that affect the cost. A supply chain factor determines how geographically dispersed the elements are that are used to manufacture the object 100 (the "supply chain") which can provide an indication of cost or time associated with retrieval of the elements from geographically distant locations to manufacture the object 100. A floor space factor includes an estimate of how large an area of a factory floor or what portion of available factory space or equipment is predicted to be used for manufacture of the object 100. This space allocation provides an indication of opportunity cost associated with manufacturing the object 100. A cost estimate factor includes an estimate of a total cost of manufacture of the object 100 and can include costs associated with parts, materials, and labor associated with manufacturing.

The weight cost analysis (block 62) applies a cost to the additional weight of the object 100. In an example with the object 100 used on an aircraft, the cost can be based on an expected increase in the cost to operate the aircraft such as accounting for a reduction in fuel efficiency. The cost can also factor an increase in wind drag and thus reduction in fuel efficiency caused by a change in size of the object 100. In some examples, the costs also include the cost of the material that is added to the object 100 (or the material that is reduced). In some examples, the weight cost is a linear relationship with each unit increase in weight corresponding to corresponding increase in cost. In some examples, the analysis assigns a predetermined value for each additional unit of weight added to the design 110.

The total cost function (block 63) analyzes the compromise between the costs for rework and the costs for weight. In some examples, the total cost function minimizes the overall cost.

In some examples, the cost analysis 60 is only performed on designs 110 that meet the strength requirements. A design that does not meet the requirement is not analyzed as it is not a viable option.

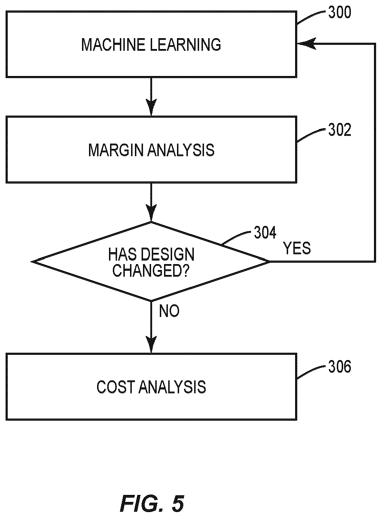

In some examples, the evaluation process 90 is iterative that evaluates multiple designs 110. Figure 5 illustrates an example in which the design 110 is analyzed for defects through the machine learning 20 (block 300) and then undergoes margin analysis 40 (block 302). If the design 110 has changed as a result of the margin analysis 40 (block 304), the process performs machine learning 20 on the new design 110. If the design 110 has not changed, cost analysis 60 is performed on the design 110 (block 306). The process can continue repeatedly until a design 110 is acceptable and is then analyzed for total cost.

In some examples as illustrated in Figure 5, machine learning 20 is performed prior to performing margin analysis 40. In other examples, margin analysis 40 is performed first prior to performing machine learning 20.

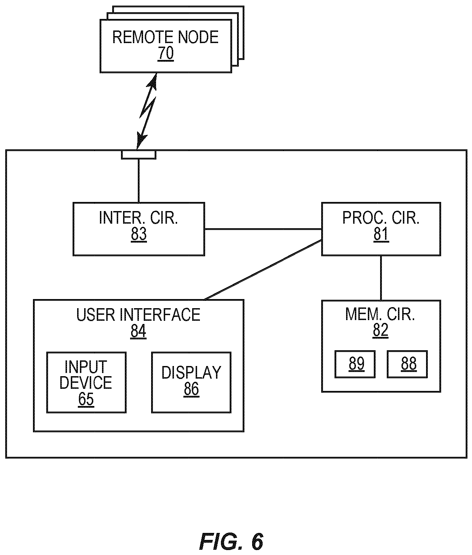

Figure 6 illustrates a computing device 80 configured to perform the design evaluation. The computing device 80 can include a variety of different forms, including but not limited to a server computer, a workstation computer, a desktop computer, a smartphone, tablet computer, and a laptop computer. The computing device 80 can include one or more of each of a number of components such as, for example, processing circuitry 81 (e.g., processor unit) connected to a memory circuitry 82 (e.g., storage device).

In some examples, the processing circuitry 81 is composed of one or more processors alone or in combination with one or more memories. The processing circuitry 81 is generally computer hardware that is capable of processing information such as, for example, data, computer programs and/or other suitable electronic information. The processing circuitry 81 is composed of a collection of electronic circuits some of which may be packaged as an integrated circuit or multiple interconnected integrated circuits (an integrated circuit at times more commonly referred to as a "chip"). In some examples, the processing circuitry 81 is configured to execute computer programs 89 such as the machine learning model 29 which may be stored onboard the processing circuitry 81 or otherwise stored in the memory circuitry 82 (of the same or another device).

In some examples, the processing circuitry 81 is a number of processors, a multi-core processor or some other type of processor, depending on the particular implementation. Further, the processing circuitry 81 may be implemented using a number of heterogeneous processor systems in which a main processor is present with one or more secondary processors on a single chip. As another illustrative example, the processing circuitry 81 may be a symmetric multi-processor system containing multiple processors of the same type. In yet another example, the processing circuitry 81 may be embodied as or otherwise include one or more ASICs, FPGAs or the like. Thus, although the processing circuitry 81 may be capable of executing a computer program 89 to perform one or more functions, the processing circuitry 81 of various examples may be capable of performing one or more functions without the aid of a computer program. In either instance the processing circuitry 81 may be appropriately programmed to perform functions or operations according to example implementations of the present disclosure.

The memory circuitry 82 is generally computer hardware that is capable of storing information such as, for example, data, computer programs (e.g., computer-readable program code) and/or other suitable information either on a temporary basis and/or a permanent basis. The memory circuitry 82 may include volatile and/or non-volatile memory and may be fixed or removable. Examples of suitable memory circuitry 82 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory circuitry 82 may be referred to as a computer-readable storage medium. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

Computing device 80 also includes communications interface circuitry 83 configured to transmit and/or receive information, such as to and/or from one or more remote nodes 70 such as user devices, other apparatus(es), network(s), databases, or the like. The communications interface circuitry 83 may be configured to transmit and/or receive information by physical (wired) and/or wireless communications links. Examples of suitable communication interfaces include a network interface controller (NIC), wireless NIC (WNIC) or the like. The communications interface circuitry 83 may have one or more transmitters and/or receivers.

A user interface 84 provides for a user to control one or more aspects of the design evaluation. The user interface 84 includes one or more input devices 85 such as but not limited to a keypad, touchpad, roller ball, and joystick. The user interface 84 also includes one or more displays 86 for displaying information regarding the evaluation and/or for an operator to enter commands to the processing circuitry 81.

As will be appreciated by those of ordinary skill in the art without undue experimentation, program instructions 88 may be loaded onto a computing device or other programmable apparatus from a computer-readable storage medium to produce a particular machine, such that the particular machine becomes a means for implementing the functions specified herein. These program instructions 88 may also be stored in a computer-readable storage medium that can direct a computer, a processing circuitry or other programmable apparatus to function in a particular manner to thereby generate a particular machine or particular article of manufacture. The program instructions 88 may be retrieved from a computer-readable storage medium and loaded into a computer, processing circuitry or other programmable apparatus to configure the computing device 80, processing circuitry 81 or other programmable apparatus to execute operations to be performed on or by the computing device 80, processing circuitry 81 or other programmable apparatus.

Retrieval, loading and execution of the program instructions 88 may be performed sequentially such that one instruction is retrieved, loaded and executed at a time. In some example implementations, retrieval, loading and/or execution may be performed in parallel such that multiple program instructions 88 are retrieved, loaded, and/or executed together. Execution of the program instructions 88 may produce a computer-implemented process such that the program instructions 88 executed by the computer, processing circuitry or other programmable apparatus provide operations for implementing functions described herein.

In some examples as illustrated in Figure 6, the computing device 80 is configured to perform the evaluation process. In other examples (not illustrated), two or more computing devices are communicatively coupled and together perform the evaluation process. In one example, the machine learning model 29 is part of a second computing device. The computing device 80 and the second computing device are interconnected via one or more networks to enable data communications. For example, the two are coupled through one or more wireless networks, one or more wireline networks, or any combination thereof.

The aspects disclosed herein for the evaluation process may be carried out in other ways than those specifically set forth herein without departing from essential characteristics of the disclosure. The present embodiments are to be considered in all respects as illustrative and not restrictive, and all changes coming within the meaning and equivalency range of the appended claims are intended to be embraced therein.

## Claims

1. A method of evaluating a design (110) of an object (100), the method comprising:
analyzing the design (110) using a machine learning model (29) representative of production data;
predicting defect probabilities based on the machine learning model (29);
determining a rework cost of the design (110) based on the defect probabilities;
performing strength analysis on the design (110);
determining a weight of the design (110);
determining a weight cost of the design (110) based on the weight of the design (110); and
analyzing the design (110) based on the weight cost and the rework cost.

2. The method of claim 1, further comprising:
performing the analysis on the design (110) and ensuring the design (110) is within a margin of safety; and
determining the weight of the design (110) that is within the margin of safety.

3. The method of claim 1 or 2, further comprising:
performing the analysis on the design (110) and determining that the design (110) is not within a margin of safety;
in response, adding one or more composite plies of material to the design (110) and increasing the weight of the design (110); and
performing the analysis again and determining that the design (110) is within the margin of safety.

4. The method of any preceding claim, further comprising:
performing the analysis and determining that the design (110) exceeds a margin of safety;
in response, removing one or more composite plies of material from the design (110) and decreasing the weight of the design (110); and
performing the analysis again and determining that the design (110) is within the margin of safety.

5. The method of any preceding claim, further comprising determining the defect probabilities based on an expected process configuration for manufacturing of the design (110).

6. The method of any preceding claim, wherein determining the rework cost of the design (110) comprises factoring one or more of a supply chain dispersion and a total cost of manufacturing of the design (110).

7. The method of any preceding claim, wherein analyzing the design (110) based on the weight cost and the rework cost comprises minimizing the weight cost and the rework cost of the design (110).

8. The method of any preceding claim, further comprising factoring the defect probabilities of the design (110) when performing the analysis on the design (110).

9. The method of any preceding claim, further comprising determining the defect probabilities of the design (110) prior to determining the rework cost of the design (110).

10. A computing device configured to evaluate a design (110) of an object (100), the computing device comprising:
memory circuitry (82) with stored program instructions; and
processing circuitry (81) configured to execute the program instructions (88) to cause the computing device to:
predict defect probabilities of manufacturing the design (110) based on a machine learning model (29);
determine a rework cost of reworking the design (110);
determine that the design (110) exceeds a margin of safety for strength;
determine a weight cost of the design (110); and
determine a total cost of the design (110) based on the rework cost and the weight cost.

11. The computing device of claim 10, wherein the processing circuitry (81) is configured to change the design (110) by one of adding one or more plies to the design (110) or removing one or more plies from the design (110).

12. The computing device of claim 10 or 11, further comprising a machine learning model (29) stored in the memory circuitry (82) that is configured to predict the defect probabilities.
